# EUROPEAN PATENT APPLICATION

(11) **EP 3 647 754 A1**
(43) Date of publication of application: **06.05.2020**
(21) Application number: 19460052.4
(22) Date of filing: 02.10.2019
(51) Int. Cl.: G01L 3/10, G01M 15/06

(54) **METHOD OF MECHANICAL LOAD ESTIMATION OF POWER MACHINES, PREFERABLY PISTON COMBUSTION ENGINES**

(30) Priority: 05.11.2018 PL 42764918
(71) Applicant: Akademia Morska W Szczecinie, 70-500 Szczecin (PL)
(72) Inventor: Chybowski, Leszek, 72-123 Kliniska (PL); Kazienko, Damian, 71-050 Szczecin (PL)
(74) Representative: Kachnic, Tadeusz

(57) **Abstract**

An Electronic Deviation Detector monitors the value of signals from sensors that monitor the condition of a diagnosed object, equipped with a power supply block (2), LCD display (6), optical or acoustic indication of an alarm condition (7), and main switch (3). It is characterised by the fact that it has a programmable logic controller (1), switch block (4) for selecting the measuring channels, a potentiometer block (5), signal output (11) to the protection alarm system, and a signal input (9) from the diagnosed object.

The method of detection using an electronic deviation detector monitors the value of signals from sensors that monitor the condition of a diagnosed object which is characterised by the fact that the signal input (9) is deactivated while the signal from this input is simulated.

## Description

The subject of the application is a method for assessing the mechanical load of power machinery, especially internal combustion piston engines.

The load of a machine is determined by the forces and moments of force acting on the components of the machine. The values of these forces and moments are determined by the operating parameters of the machine and the residual process characteristics that can be monitored during operation. Currently, in the case of internal combustion engines, the most important devices of this type are: twist testers (torque measuring shafts) - devices that measure the angles of rotation of the shaft which transmits rotary movement and, subsequently, determine the amount of torque; twist tester systems - tachometers - which simultaneously measure the torque and rotational speed of the machine, making it possible to calculate the useful power of an engine; mechanical indicators, electronic indicators, and pi-meters - devices for determining the average indexed pressure, induced power, and, subsequently, calculating the approximate torque and useful power; and thermoanalysers and vibroanalysers - devices which analyse the characteristics and measurements of signals that represent residual processes related to energy dissipation. The patent description PL225808 gives the twist tester, consisting of a main shaft seated in a sleeve on two deep-groove ball bearings, where the main shaft is connected to a sprocket wheel by a measuring disc fitted with screws seated on one end of the torsion shaft. The other end of the torsion shaft is connected shape-wise to the main shaft, where the measuring disc and the main shaft around the perimeter have slots cut in order to produce impulses in the sensors when the shaft rotates. The application PL416622 provides a digital twist tester, equipped with strain gauges and a microprocessor-based analogue-to-digital converter, in which the electromagnetic torque signal transmitter is located in the central moving part of the shaft between the bearings and the electromagnetic receiver connected to the microprocessor circuit in a copper foil-screened twist tester housing. The patent description PL 201994 provides a strain gauge twist tester, in which the transmission system with a torque light signal transmitter is placed on the movable part of the twist tester located on the motor shaft, and the torque light signal receiver is placed on the extension of the rotor rotation axis.

The essence of the solution according to the invention is a method for assessing the mechanical load of power machinery, especially internal combustion piston engines in which the drive shaft at the free end or on the shaft line, a device is placed to measure the angular position of the shaft. Then, by measuring the time of the momentary change in the position of the shaft, the rotation speed at the appropriate moments (from 0.10 - 20) over each work cycle *i* is determined. A comparison shall be made between the deviation of the calculated speeds from the average speed for the complete unit determined over n consecutive work cycles, and the calculated instantaneous speed shall be compared with the absolute permissible deviation from the calculated mean value. The permissible lower and upper limits are calculated as follows: +/-X[rpm] = (0.5 x SNBM [-] x 100% + A[%]) x (average speed [rpm]), where *SNBM* is the degree of irregularity of the machine run, and *A* is an empirical correction factor within the range <-10%,10%>. Beneficially, the shaft position sensor is located on the shaft line of the machine. It is also advantageous to calculate the momentary shaft speed every half degree of angular shaft rotation simultaneously at the two shaft ends, i.e., at the free end of the shaft and at the shaft line.

The forces acting on the machine components that vary during operation are the result of working processes (e.g., combustion in combustion chambers) and, according to the principles of dynamics, they correspond to the changing acceleration times of the rotating elements of the machine. These accelerations in turn can be determined by continuously monitoring the engine speed. It is not necessary to determine the exact values of these angular accelerations by differentiating the speed signal, and it is sufficient to determine the speeds at appropriate moments during the cycle (individual cycles in the case of multi-cylinder machines) and to compare the deviations of these speeds (defined for individual systems) with the average value of the whole device. The speed characteristics of a multi-cylinder system are determined for a specific piston position in the cylinder at which the speed characteristics of the cylinder system are measured (or of the entire machine, e.g., in the case of a single-cylinder engine). Measured speeds determined with a resolution of every half degree of crankshaft rotation are assigned to specific shaft angular positions. The shaft speed and position are measured using an angle encoder (a device that transfers the current angular position of the motor crankshaft to the system) and a clock. The difference in clock readings 2 for two consecutive shaft position readings (encoder readings) is used to determine the current crankshaft speed. For subsequent *n* engine operating cycles, the average speeds for the subsequent crankshaft positions are calculated. For two-stroke engines, the single measurement cycle shall comprise 360 degrees of crankshaft rotation, and 720 degrees of crankshaft rotation for four-stroke engines. The measured values are recorded in an array of dimensions 360 x 2 x *n* for two-stroke engines and 720 x 2 x *n* for four-stroke engines, which are updated on an ongoing basis. The value *n* is between 10 and 60, and the value is matched to the motor speed, with lower values corresponding to slow-speed motors and higher values to high-speed motors. The obtained measurements are analysed by comparing the measured value for a given angular shaft position with the limit values set at +/- X% of the average value of engine speed measured at the time of execution of n revolutions. The measured speed oscillates around the average value, and exceeding the upper or lower limit value indicates incorrect operation of the motor. A malfunctioning cylinder system is diagnosed by reading the angular value of the shaft position at which an excessive deviation of the engine speed from the mean value occurs. For the crankshaft angle read-out, a comparison is made with the closest angular position of the shaft at which ignition occurs in one of the cylinders of the engine being diagnosed. This cylinder should first be checked for improper operation, i.e. lack of ignition if the lower speed limit value is exceeded or too high and/or incorrectly adjusted (injection timing was too early) dose of fuel fed to the replaced cylinder.

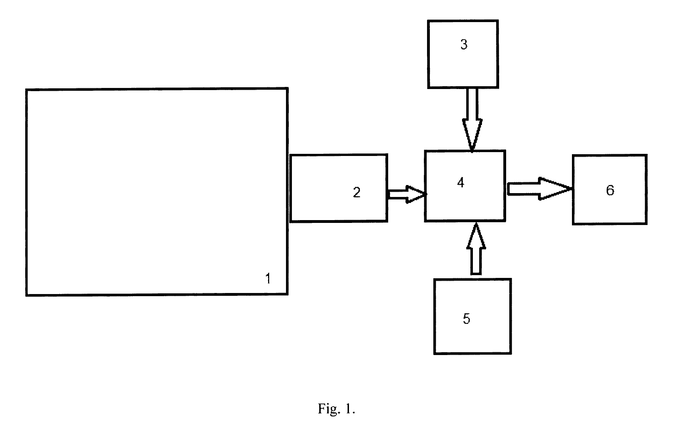

The object of the invention is shown in the example of the execution in a drawing, where Fig. 1 represents the components of the system on which the method can be implemented.

For example, the metadata is produced using an angle encoder installed at the free shaft end of a two-stroke motor. The signal is collected by a USB measurement card, from which the information reaches the analyser module, where averaging and visualization occur. An example of a visualisation in the polar system of measurements for a two-stroke, six-cylinder engine with an ignition sequence of 1-3-6-2-4-5 is given below.

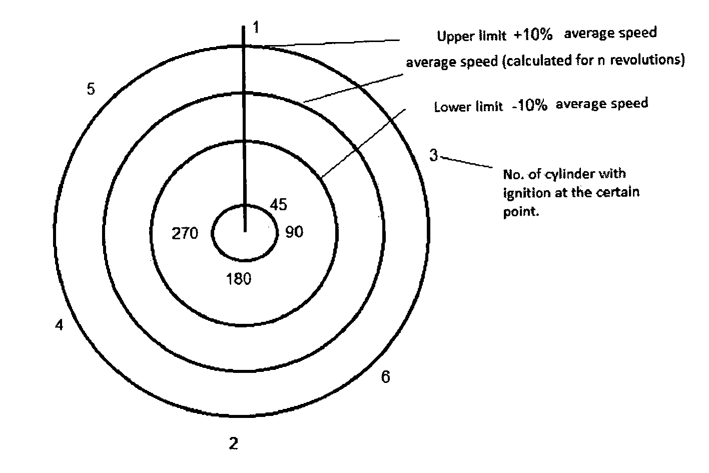

For a properly functioning engine, the speed variation recorded under the specified operating conditions shall lie within the limits set by the lower and upper limits, as shown in the following example.

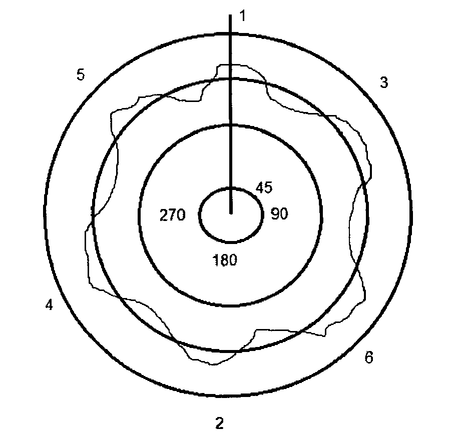

If there is no combustion in one of the cylinders, the value of the lower speed limit will be exceeded. The following example illustrates the absence of combustion in cylinder No 5.

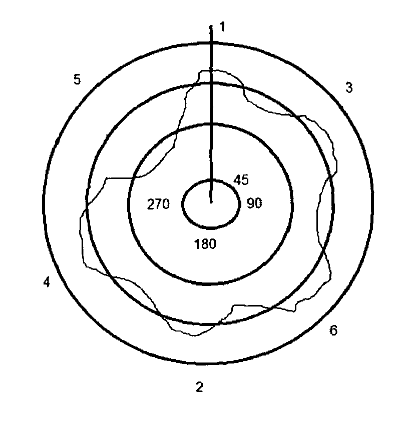

In case of burning more than the assumed fuel quantity, e.g., due to improper static control of the injection pump, the exceeding of the value of the upper deviation will be recorded during the measurement. This is illustrated below by the example of cylinder No. 6

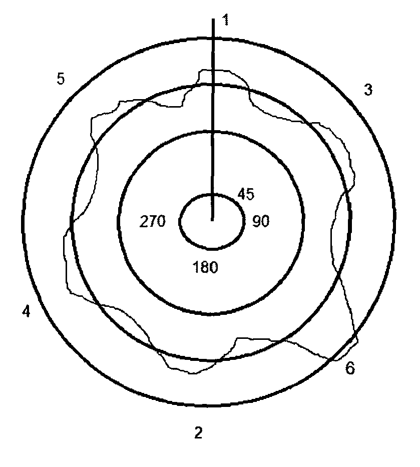

An alternative visualization using an orthogonal layout appears as:
1. Correct sequence 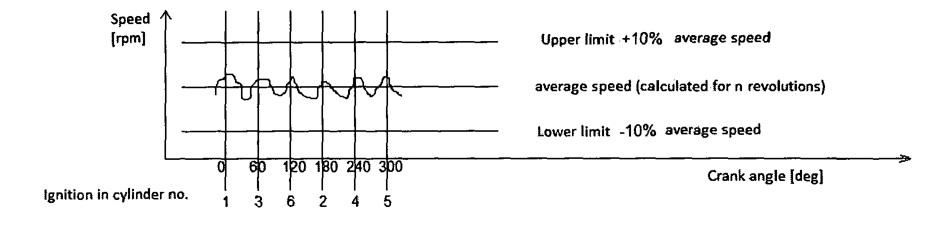
2. Insufficient power supplied by cylinder No. 5 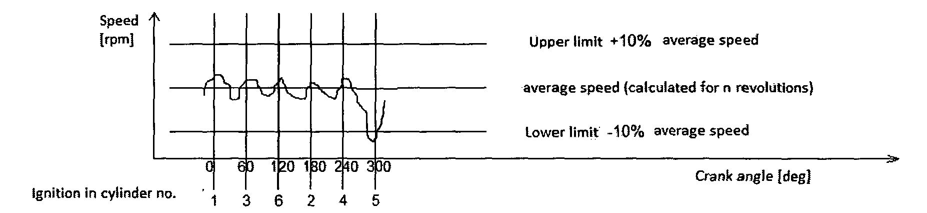
3. Too much power supplied by cylinder No. 6

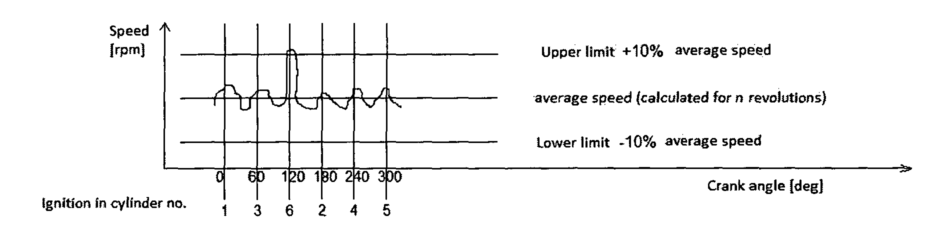

The designations on the figures denote the following in sequence: 1 - Diagnosed engine; 2 - Crankshaft angle encoder; 3 - Clock; 4 - Signal processing module which defines the instantaneous engine speeds and builds a measuring array; 5 - Input interface responsible for entering data on the number of averaging cycles *n;* engine type: two-stroke, four-stroke; the number of cylinders and their ignition sequence; 6 - engine condition visualizer responsible for comparing measured values with the mean value and deviations +/- X% of the mean speed and correlating measurements with angular positions at which ignition occurs on individual engine cylinders.

## Claims

1. The method for assessing the mechanical load of power machinery, especially internal combustion piston engines, is based on monitoring the rotational speed by a device placed at the free end or on the shaft line to measure the angular position of the drive shaft. Then, by measuring the time of the momentary change in the position of the shaft, the speed of rotation at the appropriate moments (from 0.10 - 20) over each work cycle *i* is determined. A comparison shall be made of the deviation of the calculated speeds from the average speed of the complete unit determined over n consecutive work cycles, and the calculated value of the angular velocity deviation is compared to the permitted absolute deviation from the calculated mean value. The permitted lower and upper deviations are calculated as follows: +/-X[rpm] = (0.5 x SNBM [-] x 100% + A[%]) x (average speed [rpm]), where *SNBM* is the degree of irregularity of the machine run, and *A* is an empirical correction factor within the range <-10%,10%>

2. The method according to disclaimer 1 is significant in that the shaft position sensor is located on the shaft line of the machine.

3. The method according to disclaimer 1 or 2 is significant in that the calculation of the momentary shaft speeds every half degree of angular shaft rotation is carried out simultaneously at two shaft ends, i.e. at the free end of the shaft and at the shaft line.
